# EUROPÄISCHE PATENTSCHRIFT

(11) **EP 0 870 455 B1**
(45) Veröffentlichungstag und Bekanntmachung des Hinweises auf die Patenterteilung: **12.10.2005**
(21) Anmeldenummer: 98104003.3
(22) Anmeldetag: 06.03.1998
(51) Int. Cl.: A47J 27/21, H05B 3/44

(54) **Vorrichtung zum Erhitzen von Flüssigkeiten, wie ein Wasserkochgerät**
Apparatus for heating liquids, such as a kettle
Dispositif pour chauffer des liquides, tel qu'une bouilloire

(30) Priorität: 11.03.1997 DE 29704355 U
(43) Veröffentlichungstag der Anmeldung: 14.10.1998
(73) Patentinhaber: Fritz Eichenauer GmbH & Co. KG, D-76870 Kandel (DE)
(72) Erfinder: Ohnmacht, Helmut, 76870 Kandel (DE); Kern, Norbert, 76870 Kandel (DE); Meywald, Klaus, 76870 Kandel (DE); Flaxmeyer, Rudi, 76829 Landau (DE); Bechtold, Guido, 76187 Karlsruhe 21 (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- DE-U- 29 613 481
- FR-A- 2 302 174

## Beschreibung

Die Erfindung betrifft eine Vorrichtung zum Erhitzen von Flüssigkeiten, wie ein Wasserkochgerät oder dergleichen, mit einer Basisstation sowie einem mit der Basisstation lösbar verbindbaren Flüssigkeitsbehälter, wie einem Wasserkessel oder dergleichen, der an seiner Unterseite mit einem metallischen Heizboden und einer daran durch Verlöten festgelegten metallischen Wärmeverteilerplatte versehen ist, wobei letztere mit einem Heizelement in thermischer Verbindung steht.

Aus dem DE-GM 296 13 481 ist eine gattungsgemäße Vorrichtung, kurz elektrischer Wasserkocher genannt, bekannt, bei der die Wärmeverteilerplatte mit ihrer Oberseite an der Unterseite des Heizbodens des Heizkessels flächig verlötet ist. An ihrer Unterseite weist die Wärmeverteilerplatte peripher einen Rohrheizkörper als Heizelement auf, welcher wiederum durch Verlöten an der Wärmeverteilerplatte festgelegt ist. Zentral ist die Wärmeverteilerplatte mit einer zentrischen Aussparung versehen, von der aus radial Ausnehmungen bzw. Schlitze ausgehen, wodurch die Wärmeverteilerplatte in Segmente unterschiedlicher Flächengröße aufgeteilt wird. An ihrer Unterseite ist die Wärmeverteilerplatte zur Aufnahme von Steck- und Reglerteilen zum einen mit domartigen Erhebungen mit zentraler Bohrung und zum anderen mit Befestigungslaschen, die auf der Wärmeverteilerplattenebene abgewinkelt werden können, versehen. Da bei flächigen Lötungen eine durchgehende gleichmäßige Verbindung nicht immer gewährleistet ist und dies Einfluß auf den notwendigen Wärmefluß sowohl zum Heizboden des Wasserkessels als auch zur Temperaturregeleinrichtung hat, soll durch diese segmentartige Ausbildung der Lötflächen bei der Wärmeverteilerplatte des gattungsgemäßen Wasserkochgerätes ein gezielter Wärmefluß zu den Berührungs- und Meßstellen der mit der Wärmeverteilerplatte in Berührung stehenden Elemente gewährleistet werden. Hierzu ist es aber bei der Herstellung jeweils notwendig, die Segmentteile exakt und genau an den gewünschten Wärmefluß anzupassen.

Der Erfindung liegt nun die Aufgabe zugrunde, eine Vorrichtung der eingangs genannten Art dahingehend weiterzubilden, daß auf einfache und kostengünstige Weise eine zuverlässige Verbindung zwischen der Wärmeverteilerplatte und der daran festzulegenden Elemente, insbesonders eine vollflächige Verlötung zwischen der Wärmeverteilerplatte und dem Heizboden geschaffen werden kann.

Erfindungsgemäß wird die genannte Aufgabe durch eine Vorrichtung der eingangs genannten Art dadurch gelöst, daß die Wärmeverteilerplatte an ihrer dem Heizboden zugewandten Oberseite im wesentlichen über ihre gesamte Fläche mit Aufrauhungen versehen ist. Es hat sich nämlich überraschend gezeigt, daß durch derartige Aufrauhungen, die vorzugsweise durch Vertiefungen in der Wärmeverteilerplatte erhalten sind, eine zuverlässige flächige Verlötung zwischen Heizboden und Wärmeverteilerplatte erreichbar ist. Hierdurch ist dann auch die Gewähr für einen optimalen, konstant definierten Wärmefluß zur Temperaturregeleinrichtung einerseits und zum Heizboden des Wasserkessels andererseits gegeben, was bei den bisher "glatten" Flächen zwischen Heizboden und Wärmeverteilerplatte nicht der Fall war. Auch sind nun keine Freiflächen mehr in der Wärmeverteilerplatte vorhanden, welche die Aufheizung des Wassers im Wasserkessel über den Heizboden beeinträchtigen könnten. Zur Herstellung der innigen Verbindung zwischen der Wärmeverteilerplatte und Heizboden sind beide auf ihren einander zugewandten Seiten jeweils mit einer Lotplattierung zu versehen und mit einem geeigneten Flußmittel einzusprühen. Nach dem Lötvorgang entsteht dann eine vollflächige, homogene und gut wärmeleitende Verbindung der gesamten Einheit aus Wärmeverteilerplatte und Heizboden, wodurch dann die optimale Aufheizung des Wassers im Wasserkessel gewährleistet wird.

Die Aufrauhungen können dabei in Form von sich über die Oberseite der Wärmeverteilerplatte erstreckenden Riffelungen oder aber Punktierungen bzw. Sacklöchern etc. ausgebildet sein. Handelt es sich bei den Aufrauhungen um Punktierungen, so sind diese vorzugsweise im wesentlichen gitterartig über die Wärmeverteilerplatte verteilt angeordnet und werden durch Aufwalzen von mit Stahlstiften versehenen Walzen erhalten.

Vorzugsweise sind die Punktierungen bzw. Sacklöcher im wesentlichen gratfrei ausgebildet und weisen in Weiterbildung die Form pyramidenartiger Vertiefungen auf. Die rechteckige Kantenlänge derartiger pyramidenartiger Vertiefungen kann dabei an der Oberfläche der Wärmeverteilerplatte eine Größe von etwa 315 µm x 330 µm besitzen. Die Tiefe der Punktierungen bzw. der Vertiefung beträgt vorzugsweise 135 µm x 140 µm. Die Flankensteigungen derartiger Vertiefungen pyramidenartiger Ausbildung liegt dann beispielsweise zwischen 44° und 53°.

Die Aufrauhungen können aber auch durch das Ausbilden sich kreuzender Rillen oder schlangenlinienförmig verlaufender, durchgehender Vertiefungen erhalten sein.

Um die vom Heizelement, insbesondere einem Rohrheizkörper, welcher an der Wärmeverteilerplatte festgelegt ist, abgegebene Wärme optimal übertragen zu können, besteht die Wärmeverteilerplatte vorzugsweise aus Aluminium. Der Heizboden besteht bevorzugt aus Stahl, insbesondere Edelstahl, damit sich im zu erhitzenden Wasser innerhalb des Wasserkessels keinerlei Ionen, wie beispielsweise Aluminiumionen bei Verwendung von Aluminiumböden, auslösen können, welche dann mit dem Wasser vom Menschen aufgenommen würden. Gegen die tägliche Aufnahme von geringen Mengen an Aluminium mit Getränken bestehen nämlich medizinische Bedenken, da nicht auszuschließen ist, daß diese mit dem Auftreten von Altersgedächtnisschwäche oder ähnlichen Ausfallerscheinungen in Verbindung stehen. Durch die gegebene großflächige, homogene und ebene Verlötung zwischen der Aluminiumplatte und dem Edelstahl-Heizboden ist aufgrund der erfindungsgemäßen Ausgestaltung trotz der schlechteren Wärmeleitfähigkeit des Edelstahls für eine optimale Wärmeübertragung durch Wärmeleitung gesorgt. Die Aufheizzeit des Wassers im Wasserkessel kann so erheblich reduziert werden.

In bevorzugter Ausgestaltung ist vorgesehen, daß die Wärmeverteilerplatte an ihrer Unterseite domartige Erhebungen mit jeweils einer zentralen Bohrung an ihrem freien Ende und Laschen zur Aufnahme und/oder Befestigung von Steck- und Reglerteilen oder dergleichen aufweist. Mittels derartiger Laschen und/oder domartigen Erhebungen ist ein einfaches und montagefreundliches Austauschen der Steck- und Reglereinheit(en) im Reparaturfalle möglich. In die Dome bzw. domartigen Erhebungen werden dann selbstschneidende Schrauben eingeführt, um die Verbindung zu gewährleisten. Da die domartigen Erhebungen aber lediglich durch Herausdrücken ausgebildet sind und die zentrale Bohrung eine der Stärke des Ursprungsmaterials entsprechende Länge aufweist, ist das durch die selbstschneidenden Schrauben geschaffene Innengewinde in der zentralen Bohrung nicht besonders stabil. Demgemäß ist in bevorzugter Ausgestaltung vorgesehen, daß sich die zentrale Bohrung der domartigen Erhebung in axialer Richtung über die Wandungsstärke der Erhebungen an sich hinaus erstreckt. Bei einer Stärke der Wärmeverteilerplatte von vorzugsweise etwa 1,5 mm weist die zentrale Bohrung dann vorzugsweise circa eine Länge von bis zu 2mm auf. Selbstverständlich sind auch andere Stärken bzw. Längen möglich. Auf diese Weise wird dann das durch die selbstschneidenden Schrauben herzustellende Gewinde an den domartigen Erhebungen bzw. Domen derart verstärkt, daß die hieran festzulegenden Elemente zuverlässig festgelegt werden können und auch ein Austausch derselben einfach und ohne nachfolgende Lockerung aufgrund nicht haltender Gewinde ausgeschlossen ist. Zur Erhöhung der Stabilität sind die domartigen Erhebungen an ihrer Außenseite vorzugsweise mit Verstärkungsrippen versehen. Diese sind in Weiterbildung gleichmäßig um die Bohrung verteilt angeordnet.

Insgesamt ist so eine Vorrichtung geschaffen, bei der zum einen eine zuverlässige flächige Verlötung möglich ist und zum anderen eine zuverlässige Befestigung von anderen Elementen am Boden der Wärmeverteilerplatte sichergestellt ist.

Weitere Vorteile und Merkmale der Erfindung ergeben sich aus den Ansprüchen und aus der nachfolgenden Beschreibung, in der ein Ausführungsbeispiel unter Bezugnahme auf die Zeichnung erläutert ist. Dabei zeigt:
- Fig. 1: eine Draufsicht auf eine Wärmeverteilerplatte einer erfindungsgemäßen Vorrichtung;
- Fig. 2: eine Unteransicht der Wärmeverteilerplatte aus Figur 1;
- Fig. 3: ein Schnitt entlang A-A aus Fig. 2;
- Fig. 4: einen vergrößerten Querschnitt einer domartigen Erhebung aus Fig. 3;
- Fig. 5: eine Draufsicht auf eine Befestigungslasche; und
- Fig. 6: eine teilweise Schnittansicht einer erfindungsgemäßen Vorrichtung wie ein Wasserkochgerät.

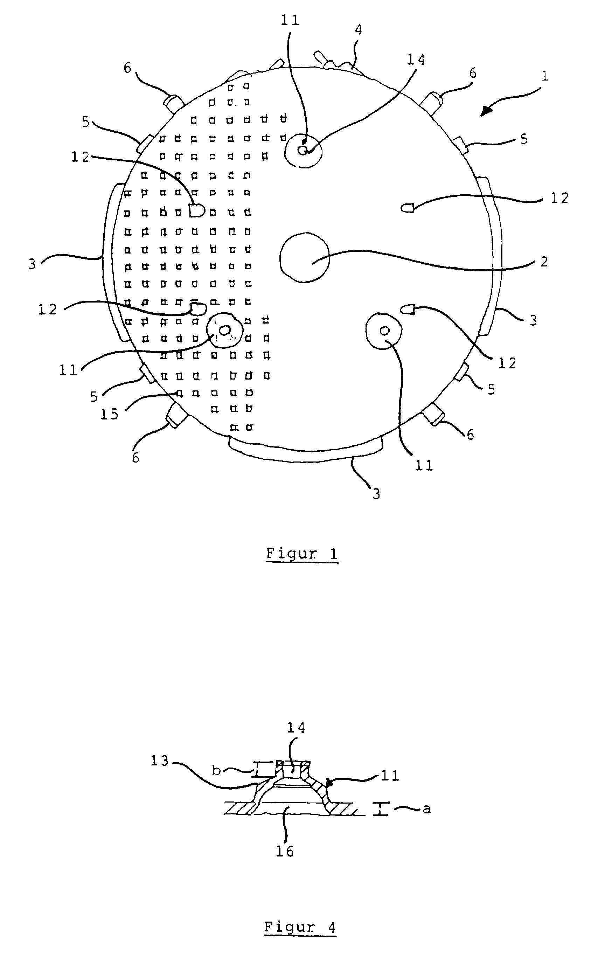

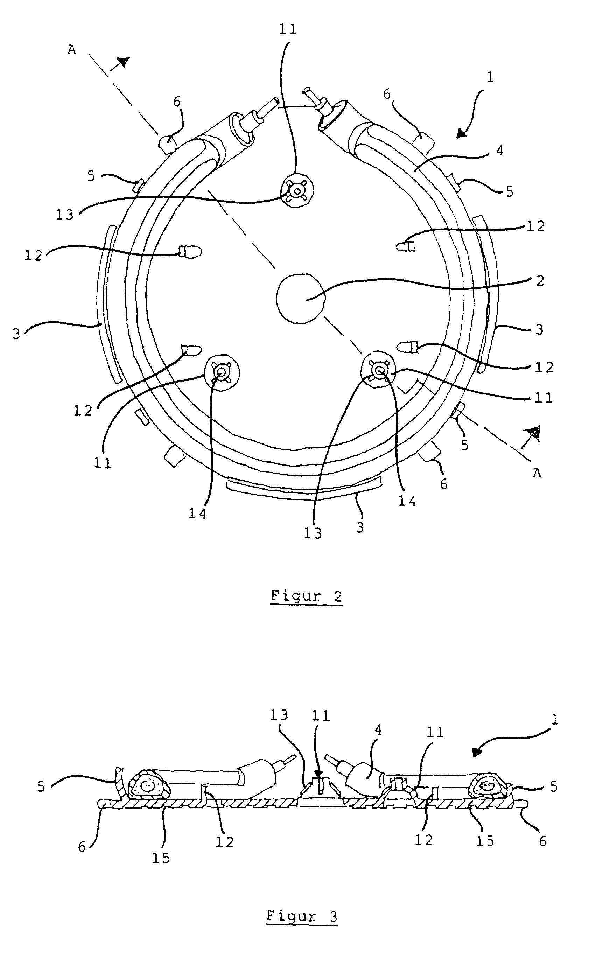

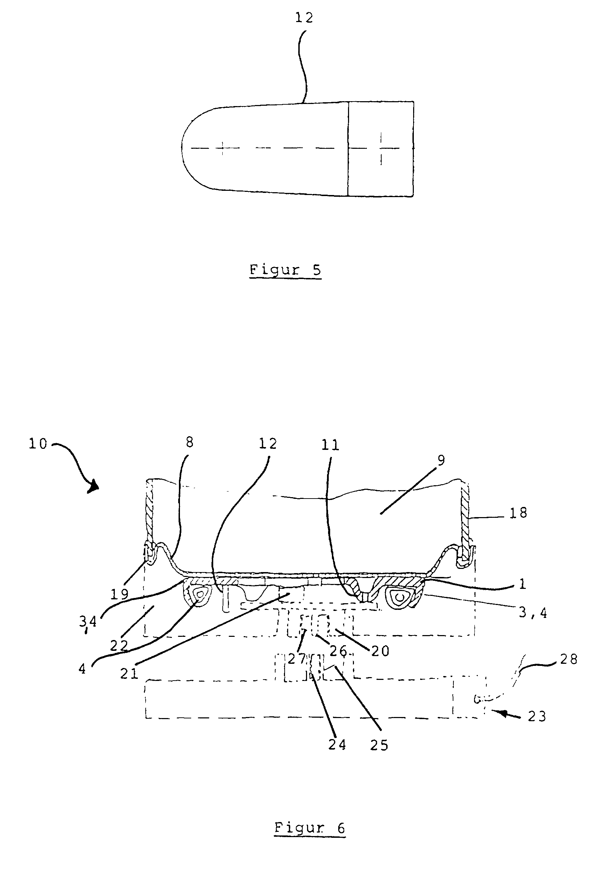

Die in Fig. 1 dargestellte Wärmeverteilerplatte 1 ist im wesentlichen kreisförmig ausgebildet und weist zentral einen kreisförmigen Durchbruch 2 auf. Bei einem Durchmesser der Wärmeverteilerplatte 1 von 11 cm beträgt der Durchmesser des Durchbruchs 2 vorzugsweise 14 mm. An ihrer Peripherie ist die Wärmeverteilerplatte 1, die bevorzugt aus Aluminium besteht, im dargestellten Ausführungsbeispiel mit drei nach unten abgewinkelten Randsegmenten 3 versehen, von denen sich zwei diametral gegenüberliegen, wobei die drei Randsegmente 3 mittig jeweils eine Lasche (nicht dargestellt) aufweisen. Diese Randsegmente 3 sowie die Laschen sind dann zur Aufnahme und Festlegung eines Rohrheizkörpers 4 bekannter Ausführung an der Unterseite der Wärmeverteilerplatte 1 vorgesehen. Des weiteren weist die Wärmeverteilerplatte 1 an ihrer Peripherie weitere Laschen 5, 6 auf, welche vorzugsweise paarweise einander zugeordnet sind und von denen jeweils eine 5 nach unten und die andere 6 entgegengesetzt nach oben abgebogen sind. Die Laschenpaare 5, 6 sind dabei gleichverteilt über die Wärmeverteiler platte 1 angeordnet. Die nach unten abgewinkelte Lasche 5 dient ebenfalls zur Fixierung des Rohrheizkörpers 4 an der Wärmeverteilerplatte 1, während die (in den Figuren 1-3 noch nicht abgebogenen) Laschen 6 zur Fixierung der Wärmeverteilerplatte 1 am Heizboden 8 eines Wasserkessels 9 der erfindungsgemäßen Vorrichtung 10 (siehe Fig. 6) dienen.

Gleichmäßig um den zentralen Durchbruch 2 herum angeordnet sind sich nach unten erstreckende domartige Erhebungen 11 (im dargestellten Ausführungsbeispiel drei an der Zahl) vorgesehen. Diese domartigen Erhebungen bzw. Dome 11 werden dabei aus der als Stanzteil ausgebildeten Wärmeverteilerplatte 1 "herausgedrückt". Des weiteren sind auf der Wärmeverteilerplatte 1 durch Ausstanzen vier Befestigungslaschen 12 (Nürnberger genannt) erhalten, welche, wie Fig. 5 zu entnehmen ist, spatelförmig ausgebildet sind und nach unten aus der Ebene der Wärmeverteilerplatte 1 herausgebogen werden können. Die domartigen Erhebungen 11 sowie diese Befestigungslaschen 12 dienen dabei zum Befestigen eines in Fig. 1 nicht dargestellten Steck- und Reglerteiles. Die durch das Ausstanzen der Befestigungslaschen 12 erhaltenen Stanzöffnungen werden nach dem Herausbiegen aus der Ebene der Wärmeverteilerplatte 1 verpreßt und geschlossen, damit in diesem Bereich beim Verlöten kein Fluß- oder Lötmittel austreten kann, welches die Messungen der Reglerteile behindern bzw. verfälschen würde.

Die zentrale Öffnung 2 kann zum einen dazu dienen, die Lötqualität optisch zu bewerten und zum anderen kann durch diese Öffnung Fluß- oder Lötmittel beim Verlöten in Form von Dampf entweichen. Hierzu können auch die zentral in den domartigen Erhebungen ausgebildeten zentralen Bohrungen 14 dienen. Durch diese Bohrungen 14 wird ebenfalls die Ausdampfung des Flußmittels beim Löten begünstigt.

Wie Fig. 1 zu entnehmen ist, ist die Wärmeverteilplatte 1 auf ihrer Oberseite mit Aufrauhungen in Form von Punktierungen 15 versehen. Diese Punktierungen 15 sind dabei gitterartig gleichmäßig über die gesamte Oberfläche der Wärmeverteilerplatte 1 verteilt angeordnet. Durch diese Punktierungen 15 wird das Verlöten der Wärmeverteilerplatte 1 am Heizboden 8 des Wasserkessels 9 begünstigt. Hierzu wird auf die die Punktierungen 15 aufweisende Oberseite der Wärmeverteilerplatte 1 sowie auf die Unterseite des Heizbodens 8 eine Lötplattierung aufgebracht und beide anschließend mit Flußmittel besprüht. Durch nachfolgendes Verlöten werden dann beide Teile aneinander zuverlässig und großflächig, innigst miteinander verbunden, festgelegt.

Die Punktierungen 15 sind vorzugsweise in Form von Sacklöchern in Art pyramidenartiger Vertiefungen ausgebildet, wobei die Kantenlänge an der Oberfläche 315 µm x 330 µm beträgt. Die Flankensteigungen derartiger pyramidenartiger Vertiefungen liegt dann zwischen 44° und 53°, wobei die an ihrer Oberfläche gratfreien Punktierungen 15 eine Tiefe von ca. 135 µm - 140 µm aufweisen.

Wir beziehen uns nachfolgend auf Fig. 4, in der eine domartige Erhebung 11 im Längsschnitt vergrößert dargestellt ist. Die domartigen Erhebungen 11 werden dabei zunächst aus dem Grundmaterial der Wärmeverteilerplatte 1 herausgezogen. Die Erhebungen 11 weisen dabei zentral die Bohrung 14 auf, um die herum an der Außenseite gleichmäßig verteilt vier Verstärkungsrippen 13 angeordnet sind. Wie Fig. 4 zu entnehmen ist, weist die domartige Erhebung 11 ausgehend von innen nach außen einen sich im wesentlichen nach außen konisch verjüngenden Innenraum 16 auf, der in die Bohrung 14 geringeren Durchmessers mündet. Die axiale Höhe bzw. Länge b der Bohrung 14 ist dabei größer als die Wandstärke a der domartigen Erhebungen 11 bzw. der Wärmeverteilerplatte 1. In diese zentralen Bohrungen 14 greifen jeweils selbstschneidende Schrauben zum Festlegen von in Fig. 6 dargestellten Steck- und Reglerteilen ein. Dadurch, daß die Länge b der zentralen Bohrung 14 größer ist als die Wandstärke a, wird so das Gewinde in diesem Bereich verstärkt, damit es beim Austausch von Steck- und Reglereinheiten nicht zu Beschädigungen in diesem Bereich und damit zur instabilen Fixierungen kommt.

Der Durchmesser der domartigen Erhebungen beträgt im dargestellten Ausführungsbeispiel 9-10 mm, derjenige der Bohrung 14 2,5 mm, und die Höhe der domartigen Erhebungen in etwa 5-6 mm. Die Breite der Verstärkungsrippen 13 liegt im Bereich von 1 mm.

In Fig. 6 ist nun in Teilansicht und im Längsschnitt eine erfindungsgemäße Vorrichtung 10 dargestellt. Der nur teilweise dargestellte Wasserkessel bzw. Wasserbehälter 9 weist hierbei eine Außenwand 18 aus Kunststoff auf, während sein Heizboden 8 aus Edelstahl besteht. Die Außenwand 18 wird dabei in eine am Umfangsrand des Heizbodens 8 ausgebildete Ringnut 19 eingesetzt und gegenüber dem Heizboden 8 abgedichtet.

An seiner Unterseite ist der Heizboden 8 vollflächig mit der Wärmeverteilerplatte 1 verlötet. An der Wärmeverteilerplatte 1 wiederum ist der Rohrheizkörper 4 ebenfalls durch Verlöten festgelegt, wobei der Rohrheizkörper auch mittels der Laschen 3, 5 umgriffen ist. Hierdurch sind diese Elemente Heizboden 8, Wärmeverteilerplatte 1 und Rohrheizkörper 4 optimal wärmeleitend miteinander verbunden.

Zur Aufnahme eines in Fig. 6 gestrichelt dargestellten Steck- und Reglerteiles 20 sind die domartigen Erhebungen 11 vorgesehen. Des weiteren sind die bereits bekannten Laschen (Nürnberger) 12 vorgesehen, um im Reparatur- bzw. im Erneuerungsfall weitere Befestigungsmöglichkeiten für das Steck- und Reglerteil 20 zu schaffen. An der Unterseite der Wärmeverteilerplatte 1 ist ein weiterer Regler 21 vorgesehen, welcher bei Erhitzungen an der Außenwand 18 des Wasserkessels 9 für eine Unterbrechung der Stromzufuhr zum Rohrheizkörper 4 sorgt. Gleiches geschieht, wenn das Wasser die gewünschte Temperatur im Wasserkessel 9 erreicht hat, bzw. wenn kein Wasser bzw. keine andere Flüssigkeit im Wasserbehälter 9 vorhanden ist, die Vorrichtung aber trotzdem eingeschaltet ist.

Die Unterseite des Wasserkessels 9 wird mittels einer Abdeckung 22 nach unten verschlossen, die die bereits genannten Steck- und Reglerteile 20 aufweist. Diese Abdeckung 22 stellt dabei den unteren Teil des von einer Basisstation 23 abnehmbaren Wasserkessels 9 dar und wird über Kontakte 24, 25 beim Aufsetzen auf die Basisstation 23 durch die stromleitende Verbindung 28 mit dem Stift 26 und der Kontaktfläche 27 mit Strom aus einem Netz versorgt.

## Patentansprüche

1. Vorrichtung zum Erhitzen von Flüssigkeiten, wie ein Wasserkochgerät oder dergleichen, mit einer Basisstation sowie mit einem mit der Basisstation lösbar verbindbaren Flüssigkeitsbehälter, wie einem Wasserkessel oder dergleichen, der an seiner Unterseite mit einem metallischen Heizboden und einer daran durch Verlöten festgelegten metallischen Wärmeverteilerplatte versehen ist, wobei letztere mit einem Heizelement in thermischer Verbindung steht, **dadurch gekennzeichnet, daß** die Wärmeverteilerplatte (1) an ihrer dem Heizboden (8) zugewandten Oberseite im wesentlichen über ihre gesamte Fläche mit Aufrauhungen (15) versehen ist.

2. Vorrichtung nach Anspruch 1, **dadurch gekennzeichnet, daß** die Aufrauhungen (15) durch Vertiefungen in der Wärmeverteilerplatte (1) erhalten sind.

3. Vorrichtung nach Anspruch 1 oder 2, **dadurch gekennzeichnet, daß** die Aufrauhungen in Form von sich über die Oberseite der Wärmeverteilerplatte (1) erstreckenden Riffelungen ausgebildet ist.

4. Vorrichtung nach Anspruch 1 oder 2, **dadurch gekennzeichnet, daß** die Aufrauhungen (15) in Form von sich über die Oberseite der Wärmeverteilerplatte (1) erstreckenden Punktierungen oder Sacklöchern ausgebildet ist.

5. Vorrichtung nach Anspruch 4, **dadurch gekennzeichnet, daß** die Punktierungen (15) im wesentlichen gitterartig über die Wärmeverteilerplatte (1) verteilt angeordnet sind.

6. Vorrichtung nach Anspruch 4 oder 5, **dadurch gekennzeichnet, daß** die Punktierungen (15) durch Aufwalzen von mit Stahlstiften versehenen Walzen erhalten sind.

7. Vorrichtung nach Anspruch 5 oder 6, **dadurch gekennzeichnet, daß** die Punktierungen (15) im wesentlichen gratfrei sind.

8. Vorrichtung nach einem der Ansprüche 5 bis 7, **dadurch gekennzeichnet, daß** die Punktierungen (15) in Form pyramidenartiger Vertiefungen ausgebildet sind.

9. Vorrichtung nach einem der Ansprüche 5 bis 8, **dadurch gekennzeichnet, daß** die Punktierungen (15) eine Tiefe von 135-140 µm aufweisen.

10. Vorrichtung nach einem der Ansprüche 1 bis 9, **dadurch gekennzeichnet, daß** die Wärmeverteilerplatte (1) aus Aluminium ist.

11. Vorrichtung nach einem der Ansprüche 1 bis 10, **dadurch gekennzeichnet, daß** der Heizboden (8) aus Stahl, insbesonders Edelstahl, ist.

12. Vorrichtung nach einem der Ansprüche 1 bis 11, **dadurch gekennzeichnet, daß** die Wärmeverteilerplatte (1) an ihrer Unterseite mit domartigen Erhebungen (11) mit jeweils einer zentralen Bohrung (14) an ihrem freien Enden und Laschen (12) zur Aufnahme und/oder Befestigung von Steck- und Reglerteilen (20) oder dergleichen versehen ist.

13. Vorrichtung nach Anspruch 12, **dadurch gekennzeichnet, daß** sich die zentrale Bohrung (14) der domartigen Erhebung (11) in axialer Richtung über die Wandungsstärke (a) der Erhebungen (11, 12) hinaus erstreckt.

14. Vorrichtung nach einem der vorangehenden Ansprüche, **dadurch gekennzeichnet, daß** die Wärmeverteilerplatte (1) eine Stärke (a) von etwa 1,5 mm aufweist.

15. Vorrichtung nach einem der Ansprüche 1 bis 14, **dadurch gekennzeichnet, daß** die zentrale Bohrung (14) eine Länge (b) von bis zu etwa 2 mm bei einer Stärke (a) der Domwandung von etwa 1,5 mm aufweist.

16. Vorrichtung nach einem der Ansprüche 12 bis 15, **dadurch gekennzeichnet, daß** an der Außenseite der domartigen Erhebungen (11), die zentrale Bohrung (14) umgebend, gleichverteilt Verstärkungsrippen (13) ausgebildet sind.

## Claims

1. Apparatus for heating liquids, such as a kettle or the like, having a base station and a liquid container, such as a water boiler or the like, detachably connectable to said base station and which is provided on its underside with a metallic heating bottom and a metallic heat distribution plate fixed thereto by soldering, wherein the heat distribution plate is thermally connected to a heating element, **characterized in that** on its top surface facing the heating bottom (8), the heat distribution plate (1) is provided over substantially its entire surface with roughenings (15).

2. Apparatus according to claim 1, **characterized in that** the roughenings (15) are obtained by depressions in the heat distribution plate (1).

3. Apparatus according to claim 1 or 2, **characterized in that** the roughenings are constructed in the form of corrugations extending over the top surface of the heat distribution plate (1).

4. Apparatus according to claim 1 or 2, **characterized in that** the roughenings (15) are in the form of dots or blind holes extending over the top surface of the heat distribution plate (1).

5. Apparatus according to claim 4, **characterized in that** the dots (15) are distributed in latticed manner over the heat distribution plate (1).

6. Apparatus according to claim 4 or 5, **characterized in that** the dots (15) are obtained by rolling on using rolls equipped with steel pins.

7. Apparatus according to claim 5 or 6, **characterized in that** the dots (15) are substantially burr-free.

8. Apparatus according to one of the claims 5 to 7, **characterized in that** the dots (15) are constructed in the form of pyramidal depressions.

9. Apparatus according to one of the claims 5 to 8, **characterized in that** the dots (15) have a depth of 135 to 140 µm.

10. Apparatus according to one of the claims 1 to 9, **characterized in that** the heat distribution plate (1) is made from aluminium.

11. Apparatus according to one of the claims 1 to 10, **characterized in that** the heating bottom (8) is made from steel, particularly special steel.

12. Apparatus according to one of the claims 1 to 11, **characterized in that** the underside of the heat distribution plate (1) is provided with dome-like elevations (11) with in each case a central bore (14) at the free ends thereof and links (12) for receiving and/or fixing plug-in and regulating parts (20) or the like.

13. Apparatus according to claim 12, **characterized in that** the central bore (14) of the dome-like elevation (11) extends axially over and beyond the wall thickness (a) of the elevations (11, 12).

14. Apparatus according to one of the preceding claims, **characterized in that** the heat distribution plate (1) has a thickness (a) of approximately 1.5 mm.

15. Apparatus according to one of the claims 1 to 14, **characterized in that** the central bore (14) has a length (b) of up to approximately 2 mm in the case of a dome wall thickness (a) of approximately 1.5 mm.

16. Apparatus according to one of the claims 12 to 15, **characterized in that** on the outside of the dome-like elevations (11) surrounding the central bore (14) are formed uniformly distributed reinforcing ribs (13).

## Revendications

1. Dispositif pour chauffer des liquides, tel qu'une bouilloire ou similaire, comprenant une base ainsi qu'un récipient à liquide, tel qu'une bouilloire ou similaire, pouvant être relié de manière amovible au bloc de base, présentant sur sa face inférieure un fond métallique chauffant et une plaque métallique de répartition de la chaleur solidarisée à celui-ci par brasage, cette dernière étant connectée thermiquement à un élément de chauffage, **caractérisé en ce que** la plaque de répartition de la chaleur (1) présente sur sa face supérieure en regard du fond chauffant (8) des rugosités (15) sensiblement sur la totalité de sa surface.

2. Dispositif selon la revendication 1, **caractérisé en ce que** les rugosités (15) sont obtenues par des enfoncements dans la plaque de répartition de la chaleur (1).

3. Dispositif selon la revendication 1 ou 2, **caractérisé en ce que** les rugosités sont conformées en cannelures s'étendant sur la face supérieure de la plaque de répartition de la chaleur (1).

4. Dispositif selon la revendication 1 ou 2, **caractérisé en ce que** les rugosités (15) sont conformées en points ou en trous borgnes s'étendant sur la face supérieure de la plaque de répartition de la chaleur (1).

5. Dispositif selon la revendication 4, **caractérisé en ce que** les points (15) sont répartis sensiblement en quadrillage sur la plaque de dissipation de chaleur (1).

6. Dispositif selon la revendication 4 ou 5, **caractérisé en ce que** les points (15) sont obtenus par laminage au moyen de rouleaux munis de pointes d'acier.

7. Dispositif selon la revendication 5 ou 6, **caractérisé en ce que** les points (15) ne présentent pratiquement pas d'ébarbures.

8. Dispositif selon l'une quelconque des revendications 5 à 7, **caractérisé en ce que** les points (15) sont conformés en évidements pyramidaux.

9. Dispositif selon l'une quelconque des revendications 5 à 8, **caractérisé en ce que** les points (15) ont une profondeur de 135 à 140 µm.

10. Dispositif selon l'une quelconque des revendications 1 à 9, **caractérisé en ce que** la plaque de répartition de la chaleur (1) est en aluminium.

11. Dispositif selon l'une quelconque des revendications 1 à 10, **caractérisé en ce que** le fond chauffant (8) est en acier, plus particulièrement en acier spécial.

12. Dispositif selon l'une quelconque des revendications 1 à 11, **caractérisé en ce que** la plaque de répartition de la chaleur (1) est pourvue sur sa face inférieure de bossages (11) en forme de dôme présentant chacun un perçage central (14) à son extrémité libre et des éclisses (12) pour recevoir et/ou fixer des pièces de connexion et de réglage (20) ou similaires.

13. Dispositif selon la revendication 12, **caractérisé en ce que** le perçage central (14) du bossage en forme de dôme (11) s'étend en direction axiale au-delà de l'épaisseur (a) de la paroi du bossage (11, 12).

14. Dispositif selon l'une quelconque des revendications précédentes, **caractérisé en ce que** la plaque de distribution de la chaleur (1) présente une épaisseur (a) d'environ 1,5 mm.

15. Dispositif selon l'une quelconque des revendications 1 à 14, **caractérisé en ce que** le perçage central (14) présente une longueur (b) pouvant aller jusqu'à environ 2 mm pour une épaisseur (a) de la paroi du dôme d'environ 1,5 mm.

16. Dispositif selon l'une quelconque des revendications 12 à 15, **caractérisé en ce que** sur la face externe des bossages (11) en forme de dôme sont conformées des nervures de renforcement (13) réparties de manière régulière, entourant le perçage central (14).
